# EUROPÄISCHE PATENTSCHRIFT

(11) **EP 1 037 696 B1**
(45) Veröffentlichungstag und Bekanntmachung des Hinweises auf die Patenterteilung: **02.07.2003**
(21) Anmeldenummer: 98964448.9
(22) Anmeldetag: 26.11.1998
(51) Int. Cl.: B01D 17/04

(54) **VERFAHREN UND VORRICHTUNG ZUR SPALTUNG EINER ÖLHALTIGEN, WÄSSRIGEN EMULSION**
METHOD AND DEVICE FOR DEMULSIFYING AN OIL-CONTAINING AQUEOUS EMULSION
PROCEDE ET DISPOSITIF POUR DECOMPOSER UNE EMULSION AQUEUSE CONTENANT DE L'HUILE

(30) Priorität: 10.12.1997 DE 19754756
(43) Veröffentlichungstag der Anmeldung: 27.09.2000
(73) Patentinhaber: Messer Griesheim GmbH, 65933 Frankfurt am Main (DE)
(72) Erfinder: BERGER, Thomas, D-45219 Essen (DE)
(86) Internationale Anmeldenummer: EP9807639
(87) Internationale Veröffentlichungsnummer: WO99029390

(56) Entgegenhaltungen:
- WO-A-92/13051
- WO-A-93/11846
- DE-A- 4 333 318
- DE-C- 4 028 904

## Beschreibung

Die Erfindung betrifft ein Verfahren und eine Vorrichtung zur Spaltung einer ölhaltigen, wäßrigen Emulsion nach dem Oberbegriff des Anspruchs 1.

In der metallverarbeitenden Industrie fallen große Mengen Kühlschmiermittel und Waschwässer an. Diese ölhaltigen, wäßrigen Emulsionen sind relativ stabil. Denn aufgrund ihrer relativ großen Beanspruchung werden relativ hohe Anforderungen an deren Stabilität gestellt. Derartige ölhaltige, wäßrige Emulsionen dürfen auf Grund des relativ hohen Ölgehalts nicht in die Kanalisation eingeleitet werden. Sie bedürfen daher vor ihrer Entsorgung einer speziellen Aufarbeitung.

Bekannte Verfahren zur Spaltung von Emulsionen sind chemische Verfahren, wie zum Beispiel Säurespaltung, thermische Verfahren, wie zum Beispiel Verdampfen und Verbrennen, sowie elektrochemische Verfahren. Als mechanische und physikalische Verfahren sind beispielsweise das Zentrifugieren und die Adsorption zu nennen.

Durch die hohe Stabilität der ölhaltigen, wäßrigen Emulsionen sind die relativ einfachen mechanischen und physikalischen Trennverfahren nicht geeignet. Eine Emulsionsspaltung durch Säure mit anschließender Neutralisation führt zu einer relativ hohen Salzfracht im Abwasser. Bei elektrochemischen Verfahren entstehen voluminöse Schlämme, die einer weiteren Behandlung bedürfen.

In der DE 40 28 904 C1 wird ein Verfahren zur Emulsionspaltung beschrieben, bei dem Kohlendioxid eingesetzt wird. Bei diesem Verfahren wird eine Emulsion, die neben Hilfsstoffen im wesentlichen aus Öl, Wasser sowie einem anionischen Emulgator oder einer Emulgatorkombination aus anionischen und nichtionischen Tensiden besteht, entweder mit Kohlendioxid unter Druck gesättigt oder mit kohlensäurehaltigem Wasser versetzt und durch anschließendes langsames Erhitzen in eine organische und eine wäßrige Phase gespalten. Die gespaltene Emulsion wird dann in einen Behälter abgelassen, wo sich Wasserphase und Ölphase trennen. Das Verfahren wird vorzugsweise mit einer Membranfiltration kombiniert.

In der WO 92/13051 wird ebenfalls die Spaltung einer Emulsion mithilfe von Kohlendioxid vorgeschlagen. Dabei wird eine Emulsion unter Druck mit Kohlendioxid gesättigt oder mit kohlendioxidhaltigem Wasser versetzt und durch anschließendes Erhitzen und/oder Abkühlen in eine organische und eine wässrige Phase gespalten. Zum Trennen der beiden Phasen wird die mit Kohlendioxid angereicherte Emulsion mittels einer Druckhaltedrossel an einem Abscheider druckentspannt, wodurch das Kohlendioxid freigesetzt wird. Die wässrige Fraktion wird durch Ultrafiltration in ein Renetat und Wasser gespalten. Das Verfahren kann mit anderen Spaltungsverfahren kombiniert werden, etwa Ultraschalleinwirkung oder elektrische Verfahren wie Elektroflotation oder Elektroflockulation.

Die relativ milde Säurebehandlung mit Kohlendioxid führt zu wäßrigen Fraktionen, deren Reinheit oft noch nicht hoch genug ist, um eine Einleitung in die Kanalisation zu ermöglichen.

Der Erfindung liegt daher die Aufgabe zugrunde, ein Verfahren zur Spaltung von relativ schwer spaltbaren, ölhaltigen, wäßrigen Emulsionen zu schaffen, mir dem die Nachteile des Standes der Technik überwunden werden und welches eine wäßrige Fraktion liefert, die relativ hohen Anforderungen an deren Reinheit gerecht wird.

Die Aufgabe wird durch ein Verfahren gelöst, bei dem die ölhaltige, wäßrige Emulsion für eine bestimmte Zeit auf einen erhöhten Druck und eine erhöhte Temperatur gebracht wird, mit Kohlendioxid versetzt wird und dadurch gespalten wird, anschließend die vorgeklärte, an Öl verarmte Emulsion in einem Abscheider aufgetrennt wird und bei dem dann die daraus resultierende wäßrige Fraktion durch Ultrafiltration in ein Retentat und Wasser getrennt wird, und welches dadurch gekennzeichnet ist, daß die Spaltung in einem heizbaren Druckbehälter, insbesondere einem Autoklaven durchgeführt wird, wobei durch schockartige Druckentspannung über den gesamten Flüssigkeitsraum ein nach oben gerichteter Gasblasenstrom aus Kohlendioxid erzeugt wird und durch den nach oben gerichteten Gasblasenstrom aus Kohlendioxid eine ölreiche Phase abgetrennt wird.

Der wesentliche Vorteil des erfindungsgemäßen Verfahrens besteht darin, daß durch eine schlagartige Druckentlastung der mit Kohlendioxid gesättigten Lösung eine simultane Freisetzung von Gasblasen über die gesamte Emulsion bewirkt wird. Hierbei werden die gespaltenen Ölanteile durch das Aufsteigen der Gasblasen in einem ersten Vorklärungsschritt durch eine Entspannungsflotation abgetrennt, was eine wesentliche Beschleunigung der Phasentrennung bewirkt. Mit der anschließenden Ultrafiltration wird die abgetrennte wäßrige Phase so stark gereinigt, bis es sichergestellt ist, daß diese wäßrige Phase den Anforderungen an die Reinheit, die für die Einleitung in die Kanalisation erforderlich ist, erfüllt.

In einer bevorzugten Ausgestaltung der Erfindung ist es vorgesehen, daß die ölhaltige, wäßrige Emulsion auf einen Druck von bis zu 80 bar gebracht wird und anschließend auf annähernd atmosphärischen Druck entspannt wird. Dies hat den Vorteil, daß relativ viel Kohlendioxid in der Emulsion gelöst wird und zu Kohlensäure dissoziiert. Dies führt zu einer mittelstarken Säure. Die relativ große ausgasende Kohlendioxid-Menge bewirkt eine gute Flotation.

Vorzugsweise wird die ölhaltige, wäßrige Emulsion auf einen Druck von 3 bis 10 bar gebracht. Daraus ergibt sich der Vorteil, daß der apparative Aufwand relativ gering ist, wodurch nur relativ geringe Gestehungskosten anfalfen.

In einer weiterführenden Ausgestaltung der Erfindung wird die ölhaltige, wäßrige Emulsion auf eine Temperatur von 20 °C bis 60 °C gebracht. Vorteilhaft ist eine derartige Temperatur deshalb, weil dadurch der pH-Wert und somit die Säurespaltung verbessert wird.

Eine vorteilhafte Weiterbildung der Erfindung sieht vor, daß die ölhaltige, wäßrige Emulsion auf dem erhöhten Druck und der erhöhten Temperatur gehalten wird für eine Zeitdauer von 5 bis 20 min. Dadurch wird vorteilhaft die maximal mögliche Gleichgewichtskonzentration (pH-Wert) erreicht und das Kohlendioxid besonders effektiv genutzt.

Eine besonders zweckmäßige Ausführungsform der Erfindung sieht vor weist der pH-Wert der ölhaltigen, wäßrigen Emulsion nach Zugabe des Kohlendioxids einen Wert auf, der in einem Bereich zwischen ph 3 bis pH 7 liegt. Ein pH-Wert zwischen pH 3 und pH 7 ist vorteilhaft, da ein pH-Wert von kleiner 7 erfoderlich ist, um eine Säurespaltung durchzuführen. Bei einem pH-Wert von 3 liegt die Grenze für Kohlensäure.

Bevorzugt wird das Retentat dem Autoklaven über einen Speicherbehälter nach der Ultrafiltration erneut zugeführt. Diese Verfahrensweise hat den Vorteil, daß keine aufkonzentrierten Öl-wäßrige Lösung-Gemische entsorgt werden müssen, wie es bei der Ultrafiltration üblich ist.

Bevorzugt weist eine Vorrichtung zur Durchführung des Verfahrens nach der Erfindung einen Speicherbehälter, einen Autoklaven, einen Abscheider und eine Ultrafiltration auf, wobei im Bodenbereich des Autoklaven eine Eintragsvorrichtung angeordnet ist für einen feinblasigen Eintrag von Kohlendioxid.

Vorzugsweise weist die Eintragsvorrichtung eine Sinterbodenplatte, eine Kugelschüttung oder ein oder mehrere feinmaschige Siebböden auf. Unter dem Begriff "feinmaschige Siebböden" sind hier Siebböden zu verstehen mit Öffnungen in einem Bereich von 0,1 bis 1 mm im Durchmesser. Die Sinterbodenplatte weist vorzugsweise Öffnungen mit einem Durchmesser in einem Bereich von 0,01 bis 0,5 mm auf. Die Verwendung der Sinterbodenplatte hat den Vorteil, daß eine relativ hohe Homogenität des Eintrages bewirkt wird. Der Einsatz einer Kugelschüttung ist vorteilhaft, da hier kaum Verstopfungsgefahr besteht und/oder die Kugeln leicht zu reinigen sind. Eine Verwendung von ein oder insbesondere mehreren feinmaschigen Siebböden ist vorteilhaft, da diese leicht zu Reinigungszwecken entnommen oder ausgetauscht werden können.

Das erfindungsgemäße Verfahren und Vorrichtung ist anhand einer Abbildung (Fig.) und eines Ausführungsbeispiels beispielhaft näher erläutert.

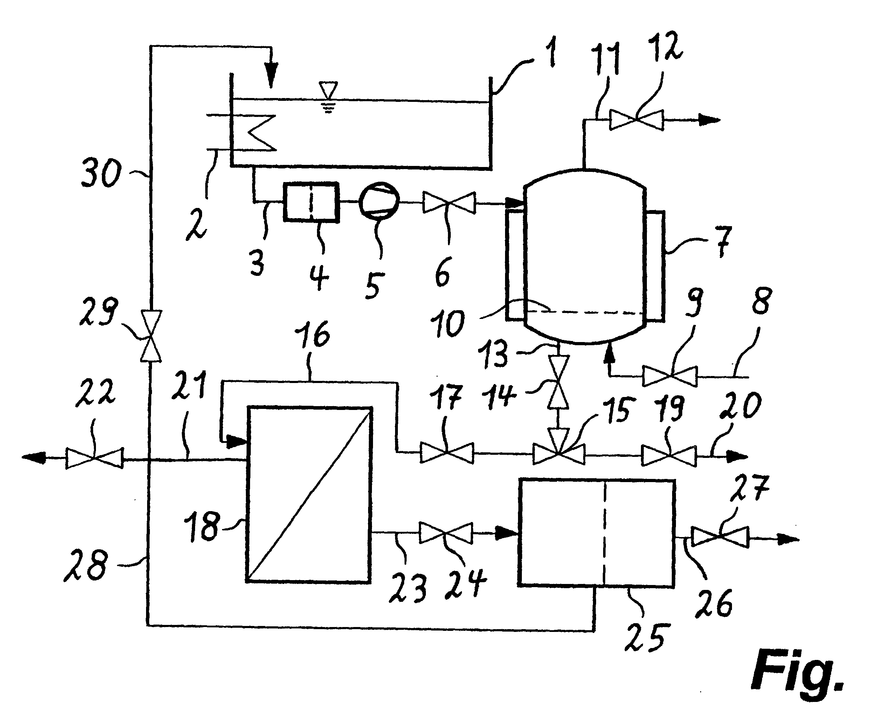

Die Abbildung (Fig.) zeigt eine Vorrichtung zur erfindungsgemäßen Spaltung einer ölhaltigen, wäßrigen Emulsion.

Aus einem Speicherbehälter 1, der mit einem Heizkörper 2 temperiert werden kann, wird die zu spaltende Emulsion über eine Leitung 3, ein Filter 4, eine Pumpe 5 und ein Ventil 6 dem Autoklaven 7 zugeführt. Eine Sättigung der Emulsion mit Kohlendioxid und der Druckaufbau im Autoklaven 7 erfolgt über eine Kohlendioxid -Versorgung bestehend aus einer Leitung 8 mit einem Rückschlagventil 9 und einer Sinterbodenplatte 10 im Bodenbereich des Autoklaven. Die Druckentlastung wird über die Leitung 11 mit einem Ventil 12 am Kopfende des Autoklaven 7 durchgeführt. Der Auslaß der gespaltenen Emulsion erfolgt am Bodenteil des Autoklaven 7 über eine Leitung 13 mit einem Ventil 14 und endet in einem Dreiwegehahn 15, von dem aus die wäßrige Phase über die Leitung 16 und Ventil 17 dem Abscheider 18 zugeführt wird. Über Ventil 19 und durch die Leitung 20 wird die Ölphase abgeführt. Die Ölphase, die bei der Trennung im Abscheider 18 freigesetzt wurde, verläßt den Abscheider 18 durch die Leitung 21 mit dem Ventil 22 und kann einer Entsorgung zugeführt werden. Der wäßrige Anteil aus dem Abscheider 18 wird durch die Leitung 23 und das Ventil 24 der Ultrafiltration 25 zugeführt. Das geklärte Wasser verläßt die Ultrafiltration 25 durch die Leitung 26 mit dem Ventil 27. Die aufkonzentrierte Ölphase der Ultrafiltration 25 wird durch die Leitung 28 durch Ventil 29 und Leitung 30 dem Speicherbehälter 1 für eine erneute Behandlung zugeführt.

Bei Betrieb der Vorrichtung wird die zu spaltende Emulsion im Speicherbehälter 1 vorgelegt Sie kann dabei mit dem Heizkörper 2 schon vorgeheizt werden um Heizdauer im Autoklaven 7 einzusparen. Vor der Einspeisung in den Autoklaven 7 durchläuft sie ein Filter 4, an dem Partikel zurückgehalten werden können und eine Pumpe 5. Im Autoklaven 7 findet eine Temperierung auf bis zu 80 °C, vorzugsweise 60 °C statt. Der Druckaufbau erfolgt mit Kohlendioxid durch eine Zufuhr am Bodenteil des Autoklaven 7. Vorteilhaft durchläuft das Kohlendioxid durch eine Sinterbodenplatte 10. Ähnlich wirksam ist eine Kugelschüttung oder eine Stapelung von feinmaschigen Siebböden, die zum einen eine Einleitung des Kohlendioxids über den gesamten Autoklavenquerschnitt ermöglichen und zum anderen durch Zerperlen des Kohlendioxids an dieser Einheit bereits kleine Kohlendioxid-Bläschen hervorbringen, die in Bezug auf die durchgehende Gasmenge eine maximale Oberfläche und somit eine schnellstmögliche Lösung des Kohlendioxids in der Emulsion bewirken. An Stelle des Autoklaven 7 kann auch ein anderer Behälter eingesetzt werden, der den Anforderungen an Druck und Temperatur gerecht wird. Durch die Kohlendioxid-Einleitung wird ein Druck bis zu 80 bar, vorzugsweise 60 bar aufgebaut. Dabei stellt sich ein ph-Wert der Emulsion ein, der unterhalb ph 7 liegt. Im sauren Bereich wird die emulgierende Wirkung der Emulsion der Tenside aufgehoben, so daß auch durch Emulgatoren sehr stark stabilisierte Emulsionen gespalten werden können. Nach der erforderlichen Behandlungszeit erfolgt durch Öffnen des Ausgangsventils 12 im oberen Bereich des Druckbehälters eine schlagartige Druckentlastung die eine sofortige, gleichmäßige Freisetzung von ca. 95 % des Kohlendioxids über den gesamten Flüssigkeitsraum bewirkt. Dabei entsteht ein nach oben gerichteter Gasstrom, der die Ölphase durch Flotation rasch nach oben trägt und somit die Trennung der beiden Phasen erheblich beschleunigt. Die auf diese Weise vorgeklärte Emulsion wird bereits nach dem Autoklaven 7 am Dreiwegehahn 15 in eine wäßrige Fraktion und eine Ölphase getrennt. Durch das Vortemperieren der Emulsion im Speicherbehälter 1 und die Verlagerung der Restspaltung in den Abscheider 18 wird der Autoklav 7 entlastet und das Verfahren wird so besonders wirtschaftlich. Beides verringert die Aufenthaltsdauer im Autoklaven 7 und erhöht dadurch die Nutzungsdauer für die aktive Spaltung mit Kohlendioxid. Die vorgeklärte wäßrige Fraktion wird durch die Leitung 16 dem Abscheider 18 zugeführt, in dem die weitere Trennung vorgenommen wird. Hierfür kommt beispielsweise ein mechanischer Abscheider in Betracht, der ein Ablassen der Ölphase ermöglicht. Vorteilhaft kann zum Beispiel ein sogenannter "Skimmer" verwendet werden, bei dem die Ölphase an der Oberfläche abgeschöpft (geskimmt) wird. Die wäßrige Phase wird erfindungsgemäß durch die Leitung 23 einer Ultrafiltration 25 zugeführt, die einleitfähiges Wasser hoher Qualität und eine aufkonzentrierte Ölphase liefert, die zur Weiterbehandlung dem gesamten Spaltkreislauf zugeführt werden kann.

## Patentansprüche

1. Verfahren zur Spaltung einer ölhaltigen, wäßrigen Emulsion, bei dem die ölhaltige, wäßrige Emulsion in einem heizbaren Druckbehälter, insbesondere einem Autoklaven (7) mit Kohlendioxid versetzt, für eine bestimmte Zeit auf einen erhöhten Druck sowie eine erhöhte Temperatur gebracht und dadurch gespalten wird, anschließend die vorgeklärte, an Öl verarmte Emulsion in einem Abscheider (18) aufgetrennt wird und dann die daraus resultierende wäßrige Fraktion durch Ultrafiltration (25) in ein Retentat und Wasser getrennt wird,
**dadurch gekennzeichnet,**
**daß** nach der Spaltung durch schockartige Druckentspannung der mit Kohlendioxid angereicherten Emulsion über den gesamten Flüssigkeitsraum im Druckbehälter ein nach oben gerichteter Gasblasenstrom aus Kohlendioxid erzeugt wird, durch welchen Gasblasenstrom eine ölreiche Phase abgetrennt wird.

2. Verfahren nach Anspruch 1,
**dadurch gekennzeichnet,**
**daß** die ölhaltige, wäßrige Emulsion auf einen Druck von bis zu 80 bar gebracht wird und anschließend auf annähernd atmosphärischen Druck entspannt wird.

3. Verfahren nach Anspruch 1 oder 2,
**dadurch gekennzeichnet,**
**daß** die ölhaltige, wäßrige Emulsion auf einen Druck von 3 bis 10 bar gebracht wird.

4. Verfahren nach einem der Ansprüche 1 bis 3,
**dadurch gekennzeichnet,**
**daß** die ölhaltige, wäßrige Emulsion auf eine Temperatur von 20 °C bis 60 °C gebracht wird.

5. Verfahren nach einem der Ansprüche 1 bis 4,
**dadurch gekennzeichnet,**
**daß** die ölhaltige, wäßrige Emulsion auf dem erhöhten Druck und der erhöhten Temperatur gehalten wird für eine Zeitdauer von 5 bis 20 min.

6. Verfahren nach einem der Ansprüche 1 bis 5,
**dadurch gekennzeichnet,**
**daß** die ölhaltige, wäßrige Emulsion nach Zugabe des Kohlendioxids einen pH-Wert aufweist, der in einem Bereich zwischen ph 3 bis ph 7 liegt.

7. Verfahren nach einem der Ansprüche 1 bis 6,
**dadurch gekennzeichnet,**
**daß** Retentat dem Autoklaven über einen Speicherbehälter nach der Ultrafiltration erneut zugeführt wird.

## Claims

1. Process for the separation of an aqueous emulsion containing oil, in which the aqueous emulsion containing oil is mixed with carbon dioxide in a heatable pressure vessel, in particular an autoclave (7), subjected for a specified time to an elevated pressure and also an elevated temperature, and separated thereby, the preclarified oil-depleted emulsion is subsequently segregated in a separating tank (18), and the resultant aqueous fraction is then separated by ultrafiltration (25) into a retentate and water, **characterized in that**, after the separation, a rising stream of carbon dioxide bubbles is produced by sudden pressure relief of the carbon dioxide-enriched emulsion over the entire liquid space in the pressure vessel, by means of which stream of bubbles an oil-rich phase is removed.

2. Process according to Claim 1, **characterized in that** the aqueous emulsion containing oil is subjected to a pressure of up to 80 bar and subsequently relieved to approximately atmospheric pressure.

3. Process according to Claim 1 or 2, **characterized in that** the aqueous emulsion containing oil is subjected to a pressure of from 3 to 10 bar.

4. Process according to one of Claims 1 to 3, **characterized in that** the aqueous emulsion containing oil is subjected to a temperature of from 20°C to 60°C.

5. Process according to one of Claims 1 to 4, **characterized in that** the aqueous emulsion containing oil is kept at the elevated pressure and the elevated temperature for a period from 5 to 20 min.

6. Process according to one of Claims 1 to 5, **characterized in that**, after the carbon dioxide has been added, the aqueous emulsion containing oil has a pH lying in the range of between ph [sic] 3 to [sic] ph [sic] 7.

7. Process according to one of Claims 1 to 6, **characterized in that** the retentate is fed back to the autoclave through a storage container after the ultrafiltration.

## Revendications

1. Procédé de séparation d'une émulsion aqueuse contenant de l'huile, selon lequel l'émulsion aqueuse d'huile est décomposée à l'aide de dioxyde de carbone dans un récipient à pression pouvant être chauffé, en particulier dans un autoclave (7), portée à une pression supérieure ainsi qu'à une température supérieure pendant un certain temps et séparée par ce moyen, après quoi l'émulsion pré-clarifiée, appauvrie en huile, est séparée dans un séparateur (18) et, ensuite, la fraction aqueuse qui en résulte est séparée en un rétentat et de l'eau par ultrafiltration (25),
**caractérisé en ce qu'**
après la séparation, par détente brusque de la pression de l'émulsion enrichie en dioxyde de carbone, on produit dans tout le volume de liquide dans le récipient à pression un courant de bulles de gaz de dioxyde de carbone dirigé vers le haut sous l'action duquel courant de bulles de gaz une phase riche en huile se sépare.

2. Procédé selon la revendication 1,
**caractérisé en ce que**
l'émulsion aqueuse d'huile est portée à une pression de jusqu'à 80 bars et, ensuite, détendue à peu près jusqu'à la pression atmosphérique.

3. Procédé selon la revendication 1 ou 2,
**caractérisé en ce que**
l'émulsion aqueuse d'huile est portée à une pression de 3 à 10 bars

4. Procédé selon une des revendications 1 à 3,
**caractérisé en ce que**
l'émulsion aqueuse d'huile est portée à une température de 20°C à 60°C.

5. Procédé selon une des revendications 1 à 4,
**caractérisé en ce que**
l'émulsion aqueuse d'huile est maintenue à la pression supérieure et à la température supérieure pendant une période de 5 à 20 min.

6. Procédé selon une des revendications 1 à 5,
**caractérisé en ce qu'**
après l'addition du dioxyde de carbone, l'émulsion aqueuse d'huile présente un niveau de pH qui se trouve dans un intervalle entre pH3 et pH7.

7. Procédé selon une des revendications 1 à 6,
**caractérisé en ce qu'**
après l'ultrafiltration, le rétentat est renvoyé une nouvelle fois à l'autoclave en passant par le réservoir.
